Europäisches Patentamt

European Patent Office

Office européen des brevets

(19)

(11) **EP 1 466 045 B1**

(12) **FASCICULE DE BREVET EUROPEEN**

(45) Date de publication et mention
de la délivrance du brevet:
**16.03.2005 Bulletin 2005/11**

(51) Int Cl.⁷: **D04H 13/00**, B29C 70/16

(21) Numéro de dépôt: **03712243.9**

(86) Numéro de dépôt international:
**PCT/FR2003/000111**

(22) Date de dépôt: **15.01.2003**

(87) Numéro de publication internationale:
**WO 2003/060218 (24.07.2003 Gazette 2003/30)**

(54) **STRUCTURE FIBREUSE POUR LA REALISATION DE MATERIAUX COMPOSITES**

FASERSTRUKTUR ZUR HERSTELLUNG VON VERBUNDMATERIALIEN

FIBROUS STRUCTURE WHICH IS USED TO PRODUCE COMPOSITE MATERIALS

(84) Etats contractants désignés:
**AT BE BG CH CY CZ DE DK EE ES FI FR GB GR
HU IE IT LI LU MC NL PT SE SI SK TR**
Etats d'extension désignés:
**LV RO**

(30) Priorité: **16.01.2002 FR 0200468**

(43) Date de publication de la demande:
**13.10.2004 Bulletin 2004/42**

(73) Titulaire: **Saint-Gobain Vetrotex France S.A.
73000 Chambéry (FR)**

(72) Inventeurs:
• **DROUX, Michel
F-73490 La Ravoire (FR)**
• **ROEDERER, François
F-73000 Chambery (FR)**

• **VINET, François
F-73000 Chambery (FR)**

(74) Mandataire: **Colombier, Christian
Saint-Gobain Recherche,
39, quai Lucien Lefranc
93300 Aubervilliers (FR)**

(56) Documents cités:
**EP-A- 0 395 548          EP-A- 0 659 922
EP-A- 0 694 643          WO-A-96/27039
DE-A- 19 608 378         US-A- 5 578 373**

• **DATABASE WPI Section Ch, Week 199711
Derwent Publications Ltd., London, GB; Class
F04, AN 1997-115837 XP002214225 & JP 09
003761 A (NIPPON PETROCHEMICALS CO LTD),
7 janvier 1997 (1997-01-07)**

## Description

L'invention concerne une structure fibreuse comprenant au moins deux couches, plus particulièrement utilisable pour la fabrication de matériaux composites.

La réalisation d'un matériau composite renforcé par des fibres passe par la mise en forme d'une structure fibreuse dans un moule puis par l'injection d'une résine à base de polymère pour imprégner la structure fibreuse. La résine est ensuite solidifiée par réticulation (cas des résines thermodurcissables) ou refroidissement (cas des résines thermoplastiques). La structure fibreuse doit de ce fait présenter un ensemble de propriétés et notamment les suivantes :

- avant imprégnation, elle doit se laisser mettre en forme facilement et donc être aisément déformable notamment à la main,
- elle doit se laisser imprégner le plus facilement possible et doit donc être le plus perméable possible vis-à-vis de la résine d'imprégnation,
- elle doit renforcer le matériau final le plus possible.

L'utilisation de fibres de polypropylène présentant une frisure a été proposée par les EP0745716, EP0659922, EP0395548 pour la constitution de structures fibreuses de renforcement. Cependant, pour nombre d'applications, la fibre de polypropylène ne présente pas de propriétés de renforcement suffisantes et par ailleurs ne se laisse pas facilement mouiller et imprégner par les résines comme les polyesters. L'utilisation d'autres fibres présentant des propriétés mécaniques supérieures et se laissant mieux imprégner est donc souhaitée. Par ailleurs, on souhaite également pouvoir utiliser des fibres sans frisure, compte tenu de ce que la réalisation d'une frisure représente une étape supplémentaire et compte tenu également de ce qu'il n'est pas toujours possible de réaliser une frisure sur une fibre, notamment une fibre de verre.

Le WO96/27039 a proposé une structure de renforcement comprenant une nappe centrale d'un non-tissé ou d'un tricot en fibre de verre. Cependant, la demanderesse a découvert que les tricots et les non-tissés du type mat à fils coupés présentaient une faible perméabilité vis-à-vis de la résine d'imprégnation. En outre, un tricot de verre ne permet pas de réaliser des structures très légères.

Comme autres document de l'état de la technique, on peut également citer WO9613627 et EP0694643.

Dans le cadre de la présente invention on appelle « mat » un non-tissé lié. Un tel mat a suffisamment de cohésion pour pouvoir être manipulé à la main sans perdre sa structure, Il possède cette cohésion du fait qu'il est lié, généralement par voie chimique (utilisation d'un liant chimique) ou par voie mécanique comme l'aiguilletage où la couture.

La structure fibreuse selon l'invention résout les problèmes susmentionnés. La structure fibreuse selon l'invention comprend au moins une couche de fils continus répartis de façon aléatoire et au moins une couche textile de renfort, les différentes couches de la structure étant reliées entre elles par un moyen mécanique ou un moyen chimique.

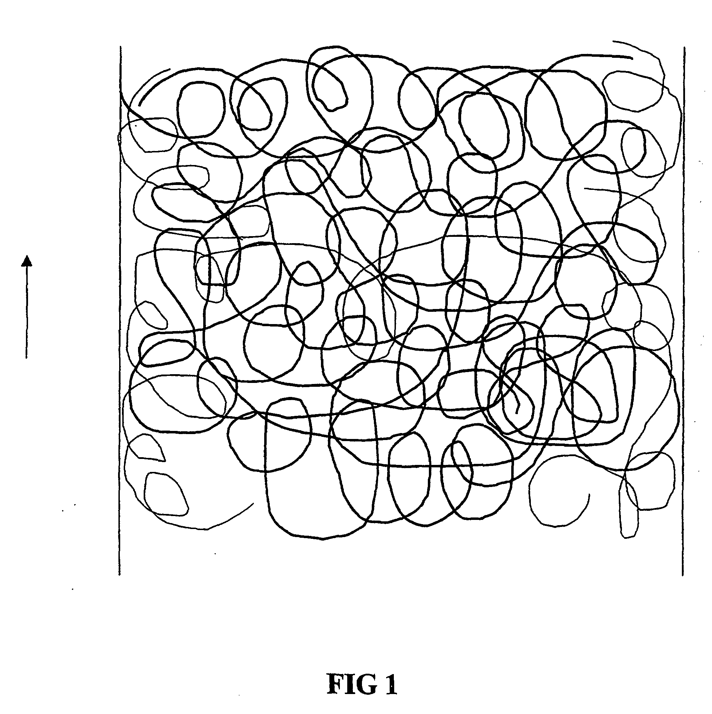

La couche de fils continus est constituée de boucles de fils continus venant se superposer partiellement les unes sur les autres. Cette couche est destinée à donner de l'épaisseur et de la déformabilité à l'ensemble de la structure. Elle est déformable et perméable aux résines usuellement utilisées dans la fabrication des matériaux composites. Généralement, les différentes boucles sont issues d'un grand nombre de fils, par exemple 80 à 600 fils. Une telle structure est visible sur la figure 1. Cette structure de la figure 1 est réalisée avec quelques fils continus (5 ou 6 seulement). La flèche sur la gauche indique le sens de défilement de la couche lors de sa fabrication. On a simplement représenté de façon simplifiée sur la figure 1 le début de la constitution d'une couche à fils continus, de façon à illustrer la forme des boucles. En effet, habituellement, la couche, lorsqu'elle est terminée comprend tellement de boucles que l'on ne peut plus voir à travers elle. C'est notamment le cas lorsqu'elle a une masse surfacique de 450 g/m$^2$. On entend par « fil » un ensemble de filaments contigus et comprenant plus particulièrement de 10 à 300 filaments. Généralement, cette couche présente une masse surfacique allant de 200 à 700 g/m$^2$ et plus particulièrement de 350 à 550 g/m$^2$ , notamment environ 450 g/m$^2$. Avantageusement, la couche de fils continus est en verre, ce qui lui confère d'importantes propriétés renforçantes. Comme couche de fils continus en verre, on peut utiliser le matériau commercialisé par Saint-Gobain Vetrotex sous la marque Unifilo®. Cette couche, dont la fonction essentielle est de donner de l'épaisseur et d'être perméable, a aussi une propriété de renfort. A grammage (c'est-à-dire masse surfacique) identique, la structure selon l'invention présente une meilleure perméabilité si on la compare à la même structure pour laquelle la couche à fils continus aurait été remplacée par un mat à fils coupés. Les fils de la couche à fils continus ont généralement une longueur allant de 2 mètres à 4 fois la longueur totale de la structure qui la contient.

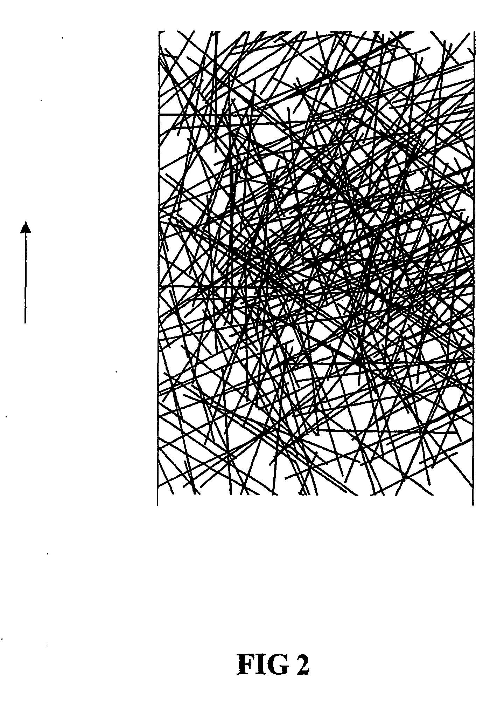

La couche textile de renfort comprend des fils et peut avoir toute structure. Elle peut être en non-tissé, en fils coupés, en mat de fils coupés, en mat de fils continus, en tissu, en nappe unidirectionnelle. De préférence, la couche textile de renfort est en fils coupés. Ces fils coupés peuvent par exemple présenter une longueur allant de 1 à 15 cm. Généralement, cette couche de renfort présente une masse surfacique allant de 100 à 600 g/m$^2$ et plus particulièrement de 200 à 400 g/m$^2$, par exemple environ 300 g/m$^2$. La figure 2 représente une couche de fils coupés peu dense vue de dessus. La flèche sur la gauche indique le sens de défilement de la couche.

La structure selon l'invention comprend de préférence une couche centrale de fils continus placée entre deux couches textiles de renfort. Dans ce cas, la structure selon l'invention comprend une deuxième couche textile de renfort, située de l'autre côté de la couche de fils continus par rapport à la première couche textile de renfort. Ces deux couches textiles de renfort peuvent être identiques ou différentes.

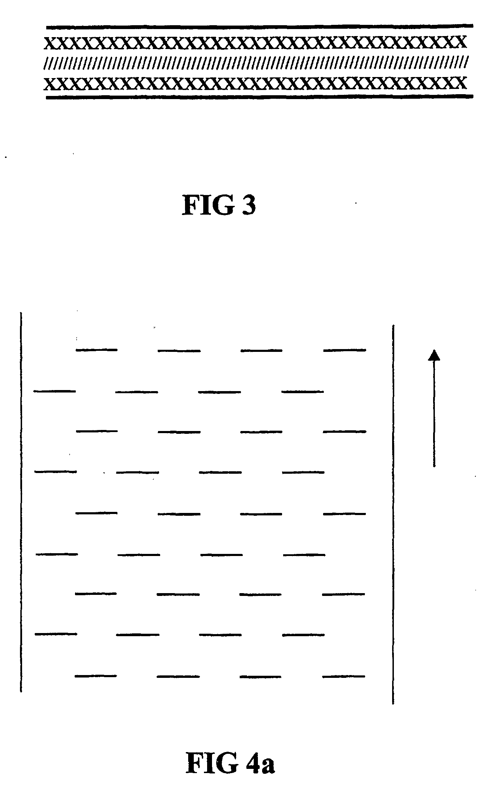

Notamment lorsque la structure selon l'invention comprend une couche de fils coupés en tant que couche textile de renfort, ladite structure peut également comprendre une couche d'un voile venant sur la couche de renfort, de l'autre côté de celui de la couche de fils continus par rapport à la couche textile de renfort. Ce voile peut constituer au moins une des deux faces externes de la structure. La structure peut également comprendre deux voiles. Ceci peut notamment être le cas lorsque la structure selon l'invention comprend une couche centrale de fils continus placée entre deux couches textiles de renfort. Dans ce cas, la structure selon l'invention peut comprendre deux couches de voile, chacune constituant une des deux couches externes de la structure. La structure comprend alors deux voiles, chacun constituant les deux faces externes de la structure. Une telle structure est représentée en coupe sur la figure 3 (sur cette figure, les symboles ont la signification suivante :

fils continus: ///////////// ; fils coupés: XXXXX ; voile : _____ ).

On entend par voile un non-tissé constitué de filaments complètement dispersés. Généralement, cette couche de voile présente une masse surfacique allant de 10 à 60 g/m$^2$ et plus particulièrement 20 à 40 g/m$^2$, par exemple environ 30 g/m$^2$.

Dans le cadre de la présente invention, il est possible d'utiliser un moyen chimique (également appelé liant) pour relier différents points à l'intérieur d'une même couche de la structure et/ou pour relier différents points de différentes couches de la structure. Notamment, la couche de fils continus peut être rendue plus cohérente par l'usage d'un liant, indépendamment de son association avec les autres couches de la structure. Dans ce cas, le liant lie les boucles de la couche de fils continus et fixe la géométrie de la couche de fils continus, ce qui évite le tassement de cette couche pendant l'imprégnation. De la sorte, cela permet d'éviter un effet de déplacement des fils constituant cette couche pendant l'imprégnation ce qui pourrait rendre celle-ci très difficile à un certain moment de l'imprégnation. C'est en ce sens que l'utilisation d'un liant favorise la perméabilité de la structure vis-à-vis de la résine d'imprégnation. Une couche de fils continus ainsi liée peut alors être appelée mat de fils continus.

Le liant peut être mis en oeuvre sous forme liquide (ce qui inclut solution, émulsion, suspension), déposé par un dispositif de type cascade ou pulvérisation, ou sous forme de poudre, déposée par un distributeur de poudre, ou sous forme de film.

De façon générale, le liant peut être mis en oeuvre sous la forme d'une poudre, laquelle peut être pulvérisée sur la couche ou la structure à lier. Lorsque le liant a pour fonction de relier différentes couches de la structure, il peut également être mis en oeuvre sous la forme d'un film placé entre les couches à relier. Un traitement thermique adapté fait ensuite fondre et/ou réticuler un composé du liant de façon à ce qu'il imprègne les différents points qu'il doit relier. Pour le cas ou le liant comprend un polymère thermoplastique, le traitement thermique fait fondre ce polymère de façon à ce qu'il imprègne différents endroits de la structure, le retour à la température ambiante se traduisant par un pontage solide entre les différents points à relier. Pour le cas où le liant comprend un composé (notamment un polymère) thermodurcissable, le traitement thermique fait réticuler (le cas échéant après fusion) ce composé de façon à ce qu'il relie par des ponts solides les différents endroits à relier. Dans les deux cas (liant thermoplastique ou thermodurcissable), le traitement thermique sert également à évaporer l'éventuel solvant utilisé pour son application. Le composé chimique peut être une résine polyester du type thermodurcissable ou thermoplastique. Comme liant réticulable (thermodurcissable), on peut utiliser un polymère acrylique.

Les différentes couches de la structure selon l'invention sont reliées entre elles par des moyens mécaniques et/ou chimiques. Par moyen mécanique on entend couture ou aiguilletage, une couture étant préférée. Par moyens chimiques, on entend un liant comme déjà mentionné. Le liant peut lier les différentes couches textiles deux-à-deux. Le liant peut être mis en oeuvre sous la forme d'une poudre ou sous forme liquide ou sous la forme d'un film interposé entre les différentes couches de la structure. Lorsqu'un voile recouvre une ou les deux couches textiles de renfort, on préfère que ce ou ces voiles soient liés par voie chimique (généralement par une colle) à la structure, notamment si l'on préfère éviter la présence en surface de la structure des marques visibles d'une liaison mécanique pour des raisons esthétiques. Ainsi, les différentes couches nonvoiles peuvent être liées par couture ou aiguilletage, alors que le ou les voiles constituant l'une ou les deux faces de la structure peuvent être liées à la structure par un liant.

Si un liant a déjà été utilisé pour donner de la cohésion à la couche de fils continus, on utilise de préférence un liant de même nature pour lier les différentes couches de la structure.

L'ensemble de la structure finale (prête à être utilisée) peut comprendre 0,5 à 10 % en poids de liant (après le traitement thermique), y compris le liant éventuellement utilisé pour donner de la cohésion à la couche de fils continus. La couche de fils continus peut comprendre 1 à 5 % en poids de liant (après le traitement thermique) par rapport à son propre poids.

Si l'on relie différentes couches textiles de la structure par couture ou aiguilletage, on peut de plus également lier par un liant les boucles de la couche de fils continus, aucun liant ne reliant différentes couches textiles entre elles.

Pour le cas ou au moins une couche textile de renfort comprend des fils coupés et que l'on relie les différentes couches textiles de la structure par couture ou aiguilletage, on peut de plus également lier par un liant les fils coupés de ladite couche textile de renfort, aucun liant ne reliant différentes couches textiles entre elles.

Les fils utilisés pour réaliser les différentes couches de la structure selon l'invention peuvent notamment être en verre ou en carbone ou en aramide. Ainsi, la couche de fils continus peut être en verre ; de même, la couche textile de renfort peut être en verre. Notamment, toutes les couches de la structure selon l'invention peuvent être en fils de verre. Généralement, le fil de verre utilisable est ensimé de façon connue de l'homme du métier. Notamment, pour réaliser la couche de fils continus, on peut utiliser un fil de verre ensimé à raison de 0,04 à 3 % en poids et notamment environ 0,2 % en poids.

La structure selon l'invention peut être réalisée en continu ou en discontinu.

Un procédé de réalisation en continu peut faire intervenir les étapes successives suivantes au-dessus d'un tapis défilant:

- réalisation d'une première couche de fils coupés par dépôt de fils coupés sur un tapis défilant, puis
- réalisation de la couche de fils continus sur la première couche de fils coupés, par réalisation de boucles (directement à partir d'une filière ou à partir d'un roving), puis
- réalisation d'une seconde couche de fils coupés par dépôt de fils coupés sur la couche de fils continus.

Le cas échéant, un voile peut être déposé avant la réalisation de la première couche de fils coupés. Le cas échéant, un voile peut être déposé après la réalisation de la seconde couche de fils coupés. La structure peut donc comprendre deux voiles placés chacun sur les faces externes de la structure.

Dans ce procédé continu, l'association des différentes couches de la structure peut être réalisée par au moins un moyen mécanique comme l'aiguilletage ou la couture et/ou au moins un moyen chimique comme un liant. Notamment, on peut relier par aiguilletage ou couture toutes les couches de la structure. Si un ou deux voiles sont utilisées sur l'une ou les deux faces de la structure, on peut relier par aiguilletage ou couture toutes les autres couches (non-voile) de la structure (notamment la ou les couches de renfort textile et la couche de fils continus) et relier la ou les couches de voile au reste de la structure par collage. Dans ce cas, on réalise l'association de la couche de fils continus et de couche(s) textile(s) de renfort au préalable par couture ou aiguilletage et l'on contrecolle ensuite la ou les couche(s) de voile sur les faces externes de la structure, l'ensemble de ces opérations pouvant être réalisé en continu.

Dans un tel procédé en continu, bien que cela ne soit pas exclu, il n'est pas forcément nécessaire d'utiliser un liant pour réaliser un pontage entre les boucles de la couche de fils continus. L'aiguilletage ou la couture donne en effet de la cohésion à l'ensemble de la structure qui peut être manipulée à la main sans risquer qu'elle ne se défasse. Il est cependant possible, en plus de l'aiguilletage ou de la couture, de prévoir de lier en plus les boucles de la couche de fils continus par un liant. Pour ce faire, il suffit d'appliquer le liant sur la couche de fils continus avant la réalisation de la seconde couche de fils coupés. Généralement, si l'on ne cherche qu'à lier les boucles de la couche de fils continus, on applique le liant par pulvérisation. On peut également chercher à utiliser un liant pour lier les différentes couches de la structure en plus de l'aiguilletage ou la couture. Pour ce faire, on peut par exemple pulvériser le liant entre la réalisation des différentes couches. On peut aussi utiliser un liant sous la forme de film, lequel est placé entre les différentes couches à coller de la structure.

On peut également utiliser un liant pour donner la cohésion à l'ensemble de la structure sans réalisation d'aiguilletage ni couture. En effet, le liant fixe d'une part la géométrie de la couche de fils continus ce qui évite le tassement de cette couche pendant l'imprégnation, et également relie deux-à-deux les différentes couches de la structure. Cela permet d'éviter un effet de déplacement de fils pendant l'imprégnation ce qui, d'une part pourrait rendre celle-ci très difficile à un certain moment de l'imprégnation, et d'autre part conférerait de l'inhomogénéité à la pièce finale. C'est en ce sens que l'utilisation d'un liant favorise la perméabilité de la structure vis-à-vis de la résine d'imprégnation. Le liant peut ainsi être pulvérisé sous forme liquide entre les différentes couches ou être appliqué sous la forme d'un film fusible entre les différentes couches. Le traitement thermique peut être réalisé sur l'ensemble de la structure de façon à n'effectuer qu'un seul traitement thermique.

Un procédé de réalisation en discontinu peut faire intervenir la réalisation séparée de la couche de fils continus sous la forme d'un mat. Pour ce faire, on réalise tout d'abord les boucles de la couche sur un tapis défilant, puis on fait passer le tapis sous une unité d'application du liant (généralement sous forme liquide), puis on fait passer le tapis dans une étuve de façon à réaliser le traitement thermique, puis on procède à l'enroulement du mat de fils continus ainsi obtenu pour réaliser un rouleau. La couche de fils continus liée (par le liant) peut ainsi être stockée sous la forme d'un rouleau d'un mat de fils continus. Après stockage, le mat de fils continus peut ensuite être inséré dans la structure selon l'invention.en reprise à partir d'un rouleau.

Dans le cas d'un procédé de réalisation en discontinu, on peut également réaliser séparément la couche textile de renfort, laquelle est insérée dans la structure selon l'invention en reprise à partir d'un rouleau.

Ainsi, pour un procédé en discontinu, on peut par exemple procéder comme cela est décrit ci-après, pour le cas ou l'on associe à la couche de fils continus deux couches de fils coupés situés de part et d'autre de la couche de fils continus :

- réalisation d'une première couche de fils coupés par dépôt de fils coupés sur un tapis défilant ou déroulement d'un rouleau de mat à fils coupés, puis
- réalisation de la couche de fils continus au-dessus de la première couche de fils coupés par réalisation de boucles (directement à partir d'une filière ou à partir d'un roving) ou par déroulement de la couche de fils continus à partir d'un rouleau de mat, en continu grâce au fait que le tapis continue de défiler, puis
- réalisation d'une seconde couche de fils coupés sur la couche de fils continus par dépôt de fils coupés ou déroulement d'un rouleau de mat à fils coupés, cette étape étant réalisée en continu grâce au fait que le tapis continue de défiler.

Le cas échéant, un voile peut être déposé avant la réalisation de la première couche de fils coupés. Le cas échéant, un voile peut être déposé après la réalisation de la seconde couche de fils coupés. La structure peut donc comprendre deux voiles placés chacun sur les faces externes de la structure.

Dans ce procédé discontinu, l'association des différentes couches de la structure peut être réalisée par au moins un moyen mécanique comme l'aiguilletage ou la couture et/ou au moins un moyen chimique comme un liant. Notamment, on peut relier par aiguilletage ou couture toutes les couches de la structure. Si un ou deux voiles sont utilisées sur l'une ou les deux faces de la structure, on peut relier par aiguilletage ou couture toutes les autres couches (non-voile) de la structure (notamment la ou les couches de renfort textile et la couche de fils continus) et relier la ou les couches de voile au reste de la structure par collage. Dans ce cas, on réalise l'association de la couche de fils continus et de couche (s). textile(s) de renfort au préalable par couture ou aiguilletage et l'on contrecolle ensuite la ou les couche (s) de voile sur les faces externes de la structure.

Dans le cadre de ce procédé en discontinu, on peut également utiliser un liant pour donner la cohésion à l'ensemble de la structure sans réalisation d'aiguilletage ni de couture. En effet, le liant relie deux-à-deux les différentes couches de la structure. Cela permet d'éviter un effet de déplacement de fil pendant l'imprégnation ce qui pourrait rendre celle-ci très difficile à un certain moment de l'imprégnation. C'est en ce sens que l'utilisation d'un liant favorise la perméabilité de la structure vis-à-vis de la résine d'imprégnation. Le liant peut ainsi être pulvérisé sous forme liquide entre les différentes couches ou être appliqué sous la forme d'un film fusible entre les différentes couches. Le traitement thermique à effectuer à cause du liant destiné à relier les différentes couches de la structure entre elles peut être réalisé sur l'ensemble de la structure, une fois que les différentes couches textiles ont été superposées.

On peut procéder à la réalisation d'entailles au travers de la couche de fils continus de façon à augmenter sa déformabilité. Ces entailles peuvent avoir n'importe quelle direction par rapport à ladite couche. Ces entailles sont réalisées par des couteaux qui coupent dans toute son épaisseur ou dans une partie seulement de son épaisseur la couche de fils continus, généralement sans enlever de matière. Elles ont une longueur limitée pouvant aller de 0,01 à 0,35 fois la largeur de la couche de fils continus. La couche de fils continus a, ainsi que la structure selon l'invention, une épaisseur, une largeur et une longueur. La largeur de la couche de fils continus est la plus petite dimension de la couche dans le plan des fils continus. On préfère que la direction des entailles soit celle de la largeur. Ainsi, pour le cas ou la couche de fils continus est destinée à être enroulée sous forme de mat, les entailles ont la même direction que l'axe des rouleaux de la couche de fils continus. Les entailles facilitent de ce fait l'enroulement de la couche en diminuant sa rigidité dans le sens de l'enroulement. Cependant, on peut également enrouler la couche de fils continus sans entailles, des entailles étant réalisées au moment de son déroulement juste avant la réalisation de la structure selon l'invention. Dans un cas comme dans l'autre, la présence d'entaille facilite l'enroulement de la structure selon l'invention.

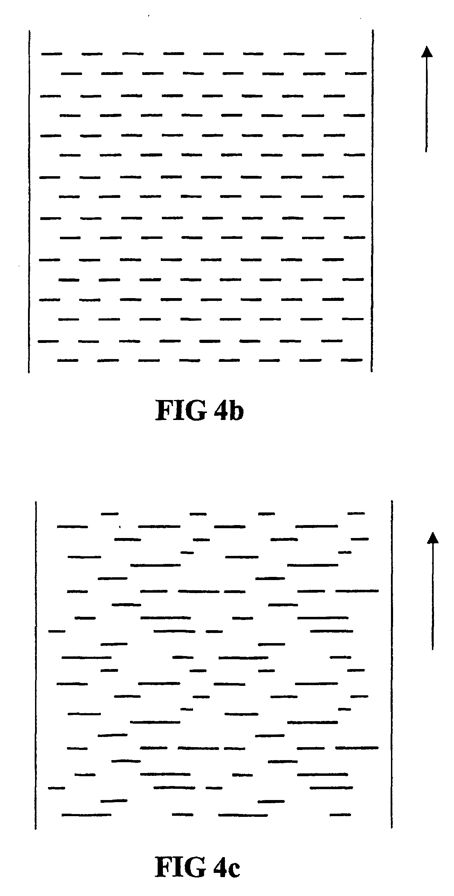

Les entailles peuvent par exemple avoir chacune une longueur allant de 0,5 à 30 cm. Les entailles peuvent par exemple être présentes à raison de 30 à 200 entailles par m$^2$ de couche de fils continus. On peut par exemple réaliser 100 telles entailles par m$^2$ de couche de fils continus. La figure 4 représente vue de dessus une couche de fils continus munie d'entailles parallèles entre elles et ayant la direction de la largeur de la couche. Différentes configurations d'entailles sont représentées sur les figures 4a, 4b, 4c. Les entailles peuvent avoir des longueurs différentes pour une même couche de fils continus, comme le montre la figure 4c. Les flèches sur les figures indiquent le sens de déroulement de la couche.

En jouant sur la quantité de liant et sur le nombre et la longueur des entailles, on peut jouer sur la rigidité de la couche de fils continus. On peut donc rattraper par des entailles la forte rigidité qu'une forte quantité de liant aurait conférée à la couche de fils continus. En augmentant le nombre d'entaille, on peut donc utiliser une forte quantité de liant fixant mieux la géométrie de la couche pendant l'imprégnation. On a en effet constaté que les entailles ne produisaient pas d'inconvénient sur le plan de l'imprégnation par la résine (pas d'effet de bourrage comme précédemment expliqué).

La structure selon l'invention se laisse facilement mettre en place dans un moule d'imprégnation par déformation à la main. La déformation est rendue facile grâce à la déformabilité de la couche de fils continus et grâce au glissement possible des différentes couches les unes par rapport aux autres au sein même de la structure. L'aiguilletage ou la couture reliant les différentes couches de la structure permet en effet un tel glissement. La structure selon l'invention se laisse facilement imprégner puisque le temps de rétention de résine à l'imprégnation est particulièrement faible. L'aptitude de la structure à se laisser imprégner peut s'évaluer à l'aide du test de perméabilité suivant :

*On réalise une pièce plane par moulage en transfert de résine (« RTM » en anglais) dans un moule équipé de capteurs de pression. Grâce à ces capteurs de pression situés à intervalles réguliers, on obtient des graphiques de la pression en fonction du temps. Ensuite, on applique la loi de Darcy pour obtenir la perméabilité k en m², laquelle vérifie l'équation (loi de Darcy):*

$$Q/s = k.\Delta P/\eta. \ \Delta x$$

dans laquelle

*Q représente le débit,*

S *représente la section de l'empreinte du moule,*

η *représente la viscosité dynamique de la résine d'imprégnation,*

*ΔP représente la différence de pression entre deux* capteurs,

*Δx représente la distance entre* deux *capteurs.*

*Les petites valeurs de k indiquent une perméabilité faible (ou une résistance élevée à l'écoulement), les grandes valeurs indiquent une perméabilité élevée (ou une résistance faible à l'écoulement).*

L'invention concerne également les matériaux composites pouvant être obtenus par imprégnation de la structure selon l'invention. Cette structure peut notamment être imprégnée par les procédés dits de moulage par transfert de résine ou RTM (de l'anglais « resin transfer molding »), ou d'infusion (« scrimp » en anglais). Ces procédés sont bien connus de l'homme du métier.

Pour imprégner la structure selon l'invention, on utilise généralement une résine du type suivant: polyester insaturé, phénolique, acrylique, époxy, vinylester.

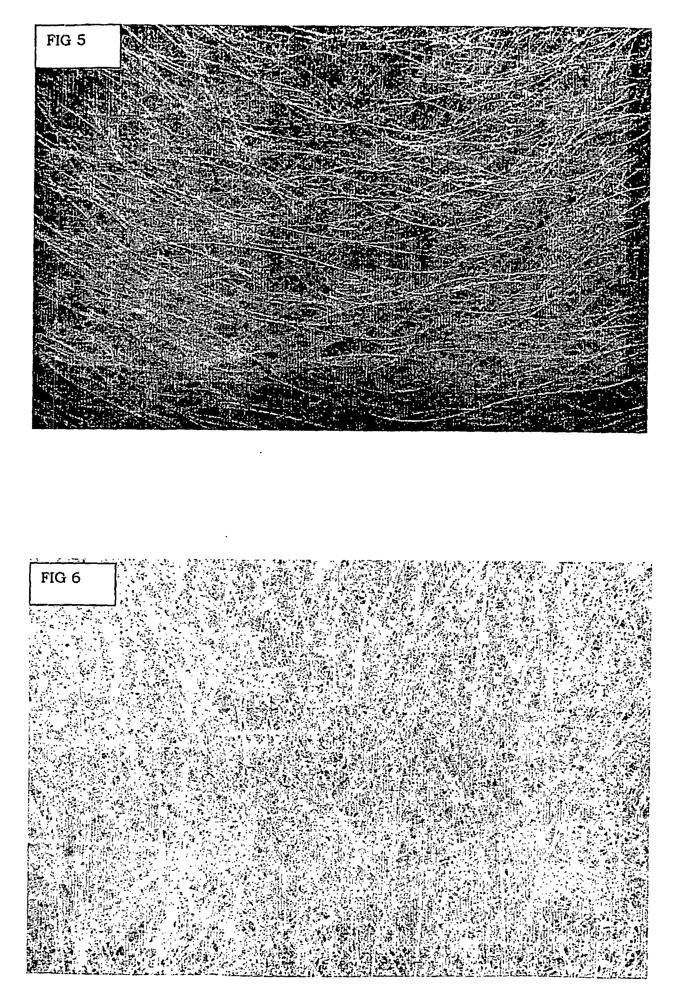

La figure 5 représente une photo d'une couche de fils continus de masse surfacique d'environ 450 g/m². La figure 6 représente une photo d'une couche de fils coupés de masse surfacique d'environ 450 g/m².

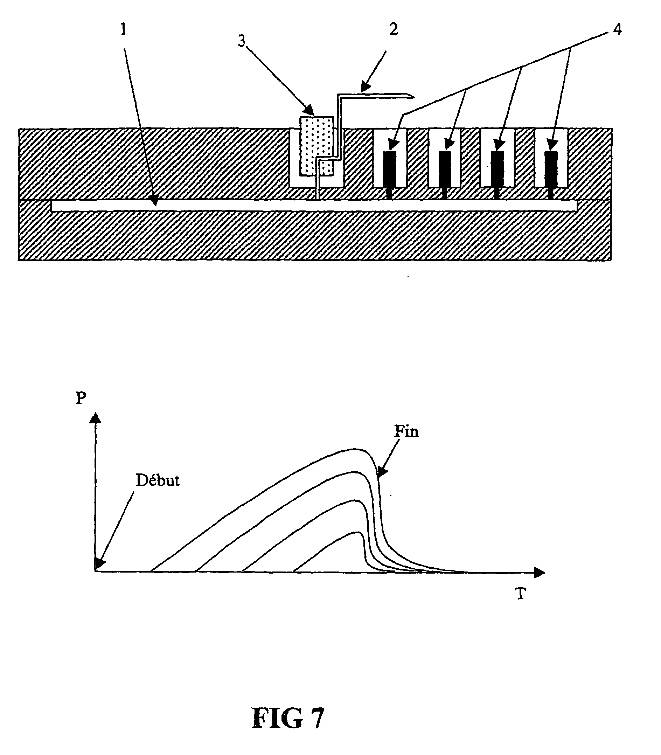

La figure 7 représente d'une part l'appareillage utilisable pour le test de perméabilité et, en dessous de lui, les courbes que l'on peut obtenir en suivant l'évolution de la pression P au cours du temps T. L'appareillage comprend un moule 1 adapté à l'imprégnation d'une structure plane par injection d'une résine aménée par une canalisation 2 à une tête d'injection 3. Les capteurs de pression 4 mesurent les pressions dans le moule.

## Revendications

1. Structure fibreuse comprenant au moins une couche de fils continus répartis de façon aléatoire et au moins une couche textile de renfort, les différentes couches de ladite structure étant reliées entre elles par un moyen mécanique ou chimique.

2. Structure selon la revendication précédente **caractérisée en ce que** la couche de fils continus a une masse surfacique allant de 200 à 700 g/m².

3. Structure selon la revendication précédente **caractérisée en ce que** la couche de fils continus a une masse surfacique allant de 350 à 550 g/m².

4. Structure selon l'une des revendications précédentes, **caractérisée en ce que** la couche textile de renfort est en fils coupés.

5. Structure selon la revendication précédente **caractérisée en ce que** la couche textile de renfort a une masse surfacique allant de 100 à 600 g/m².

6. Structure selon la revendication précédente **caractérisée en ce que** la couche textile de renfort a une masse surfacique allant de 200 à 400 g/m².

7. Structure selon l'une des revendications 4 à 6 **caractérisée en ce que** les fils coupés ont une longueur allant de 1 à 15 cm.

8. Structure selon l'une des revendications précédentes, **caractérisé en ce qu'**elle comprend une deuxième couche textile de renfort, située de l'autre côté de la couche de fils continus par rapport à la première couche textile de renfort.

9. Structure selon la revendication précédente **caractérisée en ce qu'**elle comprend au moins un voile constituant au moins une des deux faces externes de la structure.

10. Structure selon la revendication précédente **caractérisée en ce que** au moins un voile a une masse surfacique allant de 10 à 60 g/m².

11. Structure selon la revendication précédente **caractérisée en ce que** au moins un voile a une masse surfacique allant de 20 à 40 g/m².

12. Structure selon l'une des revendications précédentes **caractérisé en ce que** les différentes couches textiles non-voile sont liées par couture.

13. Structure selon l'une des revendications 1 à 11 **caractérisé en ce que** les différentes couches textiles non-voile sont liées par aiguilletage.

**14.** Structure selon l'une des revendications précédentes **caractérisé en ce que** les boucles de la couche de fils continus sont liées par un liant.

**15.** Structure selon l'une des revendications 1 à 14 **caractérisé en ce que** Jes différentes couches textiles sont liées deux-à-deux par un liant.

**16.** Structure selon l'une des revendications précédentes **caractérisé en ce que** la couche de fils continus comprend des entailles augmentant sa déformabilité.

**17.** Structure selon la revendication précédente **caractérisée en ce que** les entailles ont une longueur allant de 0,01 à 0,35 fois la largeur de la couche de fils continus.

**18.** Structure selon l'une des deux revendications précédentes **caractérisée en ce que** la direction des entailles est celle de la largeur de la structure.

**19.** Structure selon l'une des revendications 16 à 18 **caractérisé en ce que** les entailles ont une longueur allant de 0,5 à 30 cm.

**20.** Structure selon l'une des revendications 16 à 19 **caractérisé en ce que** les entailles sont présentes à raison de 30 à 200 entailles par m$^2$ de couche de fils continus.

**21.** Structure selon l'une des revendications précédentes **caractérisé en ce que** la couche de fils continus est en verre.

**22.** Structure selon l'une des revendications précédentes **caractérisé en ce que** la couche textile de renfort est en verre.

**23.** Matériau composite comprenant une structure de l'une des revendications précédentes.

**24.** Procédé de préparation en continu d'une structure fibreuse comprenant au moins une couche de fils continus répartis de façon aléatoire et deux couches textiles de renfort, la couche de fils continus étant placée entre les deux couches textiles de renfort, comprenant les étapes suivantes :

- réalisation d'une première couche de fils coupés par dépôt de fils coupés sur un tapis défilant, puis
- réalisation de la couche de fils continus sur la première couche de fils coupés, par réalisation de boucles, puis
- réalisation d'une seconde couche de fils coupés par dépôt de fils coupés sur la couche de fils continus,

les différentes couches textiles de ladite structure étant ensuite reliées entre elles par au moins un liant et/ou au moins un moyen mécanique.

**25.** Procédé de préparation en discontinu d'une structure fibreuse comprenant au moins une couche de fils continus répartis de façon aléatoire et deux couches textiles de renfort, la couche de fils continus étant placée entre les deux couches textiles de renfort, comprenant les étapes suivantes :

- réalisation d'une première couche de fils coupés par dépôt de fils coupés sur un tapis défilant ou déroulement d'un rouleau de mat à fils coupés, puis
- réalisation de la couche de fils continus au-dessus de la première couche de fils coupés par réalisation de boucles ou par déroulement de la couche de fils continus sous la forme d'un mat à partir d'un rouleau, en continu grâce au fait que le tapis continue de défiler, puis
- réalisation d'une seconde couche de fils coupés sur la couche de fils continus par dépôt de fils coupés ou déroulement d'un rouleau de mat à fils coupés, cette étape étant réalisée en continu grâce au fait que le tapis continue de défiler,

les différentes couches textiles de ladite structure étant ensuite reliées entre elles par au moins un liant et/ou au moins un moyen mécanique.

**26.** Procédé selon la revendication précédente **caractérisé en ce que** la couche de fils continus est déroulée sous la forme d'un mat à partir d'un rouleau et **en ce qu'**elle comprend des entailles.

**Claims**

**1.** A fibrous structure comprising at least one layer of randomly distributed continuous strands and at least one reinforcing fabric layer, the various layers of the structure being linked together by a mechanical means or a chemical means.

**2.** The structure as claimed in the preceding claim, **characterized in that** the continuous strand layer has a mass per unit area ranging from 200 to 700 g/m$^2$.

**3.** The structure as claimed in the preceding claim, **characterized in that** the continuous strand layer has a mass per unit area ranging from 350 to 550 g/m$^2$.

**4.** The structure as claimed in one of the preceding claims, **characterized in that** the reinforcing fabric layer is made of chopped strands.

5. The structure as claimed in the preceding claim, **characterized in that** the reinforcing fabric layer has a mass per unit area ranging from 100 to 600 g/m$^2$.

6. The structure as claimed in the preceding claim, **characterized in that** the reinforcing fabric layer has a mass per unit area ranging from 200 to 400 g/m$^2$.

7. The structure as claimed in any one of claims 4 to 6, **characterized in that** the chopped strands have a length ranging from 1 to 15 cm.

8. The structure as claimed in one of the preceding claims, **characterized in that** it includes a second reinforcing fabric layer, located on the other side of the continuous strand layer from the first reinforcing fabric layer.

9. The structure as claimed in the preceding claim, **characterized in that** it includes at least one veil forming at least one of the two external faces of the structure.

10. The structure as claimed in the preceding claim, **characterized in that** at least one veil has a mass per unit area ranging from 10 to 60 g/m$^2$.

11. The structure as claimed in the preceding claim, **characterized in that** at least one veil has a mass per unit area ranging from 20 to 40 g/m$^2$.

12. The structure as claimed in one of the preceding claims, **characterized in that** the various non-veil fabric layers are bound together by stitching.

13. The structure as claimed in one of claims 1 to 11, **characterized in that** the various non-veil fabric layers are bound together by needle punching.

14. The structure as claimed in one of the preceding claims, **characterized in that** the loops of the continuous strand layer are bound together by a binder.

15. The structure as claimed in one of claims 1 to 14, **characterized in that** the various fabric layers are bound together pairwise by a binder.

16. The structure as claimed in one of the preceding claims, **characterized in that** the continuous strand layer includes notches for increasing its deformability.

17. The structure as claimed in the preceding claim, **characterized in that** the notches have a length ranging from 0.01 to 0.35 times the width of the continuous strand layer.

18. The structure as claimed in either of the two preceding claims, ; **characterized in that** the direction of the notches is that of the width of the structure.

19. The structure as claimed in one of claims 16 to 18, **characterized in that** the notches have a length ranging from 0.5 to 30 cm.

20. The structure as claimed in one of claims 16 to 19, **characterized in that** the notches are present in an amount from 30 to 200 notches per m$^2$ of continuous strand layer.

21. The structure as claimed in one of the preceding claims, **characterized in that** the continuous strand layer is made of glass.

22. The structure as claimed in one of the preceding claims, **characterized in that** the reinforcing fabric layer is made of glass.

23. A composite having a structure of one of the preceding claims.

24. A process for the continuous production of a fibrous structure comprising at least one layer of randomly distributed continuous strands and two reinforcing fabric layers, the continuous strand layer being placed between the two reinforcing fabric layers, comprising the following steps:

 - production of a first chopped strand layer by depositing chopped strands on a moving belt; then
 - production of the continuous strand layer on the first chopped strand layer, by producing loops; and then
 - production of a second chopped strand layer by depositing chopped strands on the continuous strand layer,
 the various fabric layers of said structure then being linked together by at least one binder and/or at least one mechanical means.

25. A process for the batch production of a fibrous structure comprising at least one layer of randomly distributed continuous strands and two reinforcing fabric layers, the continuous strand layer being placed between the two reinforcing fabric layers, comprising the following steps:

 - production of a first chopped strand layer by depositing chopped strands on a moving belt or by unwinding a roll of chopped strand mat; then
 - production of the continuous strand layer on top of the first chopped strand layer by producing loops or by unwinding the continuous strand layer in the form of a mat from a roll, continuously because of the fact that the belt continues to run; and then

- production of a second chopped strand layer on the continuous strand layer by depositing chopped strands or by unwinding a roll of chopped strand mat, this step being carried out continuously because of the fact that the belt continues to run, the various fabric layers of said structure then being linked together by at least one binder and/or at least one mechanical means.

26. The process as claimed in the preceding claim, **characterized in that** the continuous strand layer is unwound in the form of a mat from a roll and **in that** it includes notches.


**Patentansprüche**

1. Faserstruktur, die mindestens eine Schicht aus zufällig verteilten endlosen Fäden und mindestens eine textile Verstärkungsschicht umfasst, wobei die verschiedenen Schichten der Struktur durch ein mechanisches oder chemisches Mittel miteinander verbunden sind.

2. Struktur nach dem vorhergehenden Anspruch, **dadurch gekennzeichnet, dass** das Flächengewicht der aus Endlosfäden bestehenden Schicht 200 bis 700 g/m$^2$ beträgt.

3. Struktur nach dem vorhergehenden Anspruch, **dadurch gekennzeichnet, dass** das Flächengewicht der aus Endlosfäden bestehenden Schicht 350 bis 550 g/m$^2$ beträgt.

4. Struktur nach einem der vorhergehenden Ansprüche, **dadurch gekennzeichnet, dass** die textile Verstärkungsschicht aus Kurzfäden besteht.

5. Struktur nach dem vorhergehenden Anspruch, **dadurch gekennzeichnet, dass** das Flächengewicht der textilen Verstärkungsschicht 100 bis 600 g/m$^2$ beträgt.

6. Struktur nach dem vorhergehenden Anspruch, **dadurch gekennzeichnet, dass** das Flächengewicht der textilen Verstärkungsschicht 200 bis 400 g/m$^2$ beträgt.

7. Struktur nach einem der Ansprüche 4 bis 6, **dadurch gekennzeichnet, dass** die Länge der Kurzfäden 1 bis 15 cm beträgt.

8. Struktur nach einem der vorhergehenden Ansprüche, **dadurch gekennzeichnet, dass** sie eine zweite textile Verstärkungsschicht umfasst, die sich in Bezug auf die erste textile Verstärkungsschicht auf der anderen Seite der aus Endlosfäden bestehenden Schicht befindet.

9. Struktur nach dem vorhergehenden Anspruch, **dadurch gekennzeichnet, dass** sie wenigstens ein Vlies umfasst, das mindestens eine der beiden Außenflächen der Struktur bildet.

10. Struktur nach dem vorhergehenden Anspruch, **dadurch gekennzeichnet, dass** das Flächengewicht mindestens eines Vlieses 10 bis 60 g/m$^2$ beträgt.

11. Struktur nach dem vorhergehenden Anspruch, **dadurch gekennzeichnet, dass** das Flächengewicht mindestens eines Vlieses 20 bis 40 m$^2$ beträgt.

12. Struktur nach einem der vorhergehenden Ansprüche, **dadurch gekennzeichnet, dass** die verschiedenen textilen Schichten, die kein Vlies sind, durch Vernähen miteinander verbunden worden sind.

13. Struktur nach einem der Ansprüche 1 bis 11, **dadurch gekennzeichnet, dass** die verschiedenen textilen Schichten, die kein Vlies sind, durch Vernadeln miteinander verbunden worden sind.

14. Struktur nach einem der vorhergehenden Ansprüche, **dadurch gekennzeichnet, dass** die Schlingen der aus Endlosfäden bestehenden Schicht durch ein Bindemittel miteinander verbunden sind.

15. Struktur nach einem der Ansprüche 1 bis 14, **dadurch gekennzeichnet, dass** die verschiedenen textilen Schichten jeweils zu zweit durch ein Bindemittel miteinander verbunden sind.

16. Struktur nach einem der vorhergehenden Ansprüche, **dadurch gekennzeichnet, dass** die aus Endlosfäden bestehende Schicht Schlitze enthält, die ihre Verformbarkeit erhöhen.

17. Struktur nach dem vorhergehenden Anspruch, **dadurch gekennzeichnet, dass** die Länge der Schlitze das 0,01- bis 0,35-fache der Breite der aus Endlosfäden bestehenden Schicht beträgt.

18. Struktur nach einem der zwei vorhergehenden Ansprüche, **dadurch gekennzeichnet, dass** die Richtung der Schlitze diejenige der Breite der Struktur ist.

19. Struktur nach einem der Ansprüche 16 bis 18, **dadurch gekennzeichnet, dass** die Länge der Schlitze 0,5 bis 30 cm beträgt.

**20.** Struktur nach einem der Ansprüche 16 bis 19, **dadurch gekennzeichnet, dass** die Schlitze mit einem Anteil von 30 bis 200 Schlitzen pro m$^2$ aus Endlosfäden bestehender Schicht vorhanden sind.

**21.** Struktur nach einem der vorhergehenden Ansprüche, **dadurch gekennzeichnet, dass** die Endlosfäden der Schicht aus Glas bestehen.

**22.** Struktur nach einem der vorhergehenden Ansprüche, **dadurch gekennzeichnet, dass** die textile Verstärkungsschicht aus Glas besteht.

**23.** Verbundmaterial, das eine Struktur nach einem der vorhergehenden Ansprüche umfasst.

**24.** Verfahren zur kontinuierlichen Herstellung einer Faserstruktur, die mindestens eine aus zufällig verteilten Endlosfäden bestehende Schicht und zwei textile Verstärkungsschichten umfasst, wobei die aus Endlosfäden bestehende Schicht zwischen den zwei textilen Verstärkungsschichten angeordnet wird, das die Stufen:

- Erzeugung einer ersten aus Kurzfäden bestehenden Schicht durch Aufbringen von Kurzfäden auf ein durchlaufendes Band, anschließend

- Erzeugung der aus Endlosfäden bestehenden Schicht auf der ersten aus Kurzfäden bestehenden Schicht durch Bildung von Schlingen und anschließend

- Erzeugung einer zweiten aus Kurzfäden bestehenden Schicht durch Aufbringen von Kurzfäden auf der aus Endlosfäden bestehenden Schicht

umfasst, wobei die verschiedenen textilen Schichten dieser Struktur danach durch mindestens ein Bindemittel und/oder mindestens ein mechanisches Mittel miteinander verbunden werden.

**25.** Verfahren zur diskontinuierlichen Herstellung einer Faserstruktur, die mindestens eine aus zufällig verteilten Endlosfäden bestehende Schicht und zwei textile Verstärkungsschichten umfasst, wobei die aus Endlosfäden bestehende Schicht zwischen den zwei textilen Verstärkungsschichten angeordnet wird, das die Stufen:

- Erzeugung einer ersten aus Kurzfäden bestehenden Schicht durch Aufbringen von Kurzfäden auf ein durchlaufendes Band oder Abwickeln einer Rolle aus einer aus Kurzfäden bestehenden Matte, anschließend

- kontinuierliche Erzeugung der aus Endlosfäden bestehenden Schicht auf der ersten aus Kurzfäden bestehenden Schicht durch Bildung von Schlingen oder Abwickeln der aus Endlosfäden bestehenden Schicht in Form einer Matte von einer Rolle, da das Band kontinuierlich durchläuft, und anschließend

- Erzeugung einer zweiten aus Kurzfäden bestehenden Schicht auf der aus Endlosfäden bestehenden Schicht durch Aufbringen von Kurzfäden oder Abwickeln einer Rolle aus einer aus Kurzfäden bestehenden Matte, wobei diese Stufe auf Grund des kontinuierlich durchlaufenden Bandes kontinuierlich ist, umfasst, wobei

die verschiedenen textilen Schichten dieser Struktur danach durch mindestens ein Bindemittel und/ oder mindestens ein mechanisches Mittel miteinander verbunden werden.

**26.** Verfahren nach dem vorhergehenden Anspruch, **dadurch gekennzeichnet, dass** die aus Endlosfäden bestehende Schicht in Form einer Matte von einer Rolle abgewickelt wird, **und dass** sie Schlitze enthält.

**FIG 1**

**FIG 2**

XXXXXXXXXXXXXXXXXXXXXXXXXXXXXXXXXXXXXXXX
////////////////////////////////////////////////////////////////////////////////
XXXXXXXXXXXXXXXXXXXXXXXXXXXXXXXXXXXXXXX

**FIG 3**

**FIG 4a**

**FIG 4b**

**FIG 4c**

FIG 5

FIG 6

**FIG 7**